# FASCICULE DE BREVET EUROPEEN

(11) **EP 4 314 634 B1**
(45) Date de publication et mention de la délivrance du brevet: **27.05.2026**
(21) Numéro de dépôt: 22719294.5
(22) Date de dépôt: 30.03.2022
(51) Int. Cl.: F21S 43/14, F21S 43/239, F21S 43/245, F21S 43/20, G02B 30/00, G02B 3/00, G02B 30/26, G02B 27/60, G06T 15/50, G02B 5/02, G02B 19/00

(54) **DISPOSITIF LUMINEUX POUR UN VÉHICULE AUTOMOBILE APTE À CRÉER UN EFFET OPTIQUE CONNU SOUS LE NOM DE MOIRÉ**
LEUCHTVORRICHTUNG FÜR EIN KRAFTFAHRZEUG, DIE ZUR ERZEUGUNG EINES MOIRÉ- BEKANNTEN OPTISCHEN EFFEKTS FÄHIG IST
LIGHT DEVICE FOR A MOTOR VEHICLE CAPABLE OF CREATING AN OPTICAL EFFECT KNOWN AS MOIRÉ

(30) Priorité: 30.03.2021 FR 2103261
(43) Date de publication de la demande: 07.02.2024
(73) Titulaire: Marelli Automotive Lighting France, 89330 Saint-Julien-du-Sault (FR)
(72) Inventeur: BUISSON, Alain, 78190 TRAPPES (FR); BROSSIER, Thibault, 78190 TRAPPES (FR)
(74) Mandataire: Jacobacci & Partners France
(86) Numéro de dépôt international: PCT/EP2022/058449
(87) Numéro de publication internationale: WO 2022/207726

(56) Documents cités:
- EP-A1- 3 364 098
- EP-A1- 3 477 188
- WO-A1-2016/120973
- CN-A- 109 519 871
- CN-A- 112 462 531
- DE-A1- 102011 016 000
- DE-A1- 102013 222 792
- JP-A- 2013 173 246
- US-A- 5 258 895

## Description

### Domaine technique auquel se rapporte l'invention

La présente invention concerne un dispositif lumineux, de signalisation et/ou d'éclairage, pour un véhicule automobile.

### Arrière-plan technologique

Les documents WO2016120973A1, JP2013173246 et DE102011016000A1 illustrent les connaissances de l'homme du métier au moment de l'invention.

La réglementation impose que chaque véhicule automobile soit équipé de dispositifs de signalisation lumineux et d'éclairage afin, respectivement, permettre au conducteur de visualiser correctement la route et indiquer aux autres utilisateurs de la route la position du véhicule automobile ainsi que les intentions de son conducteur.

Afin de faciliter l'assemblage des dispositifs de signalisation sur les véhicules automobiles, ceux-ci sont regroupés dans des blocs optiques. Un bloc optique peut ainsi comprendre un feu de route, un feu de direction, un feu de position et un feu-stop lorsque le bloc optique est destiné à être monté à l'arrière d'un véhicule automobile.

Afin de protéger les feux de l'environnement extérieur, le bloc optique est obturé par un voyant extérieur, de préférence transparent pour ne pas modifier les propriétés des faisceaux lumineux émis par les feux. Les feux sont ainsi visibles de jour, à travers le voyant extérieur. Or, la forme et l'agencement des feux modifient de façon significative l'apparence du véhicule automobile.

Ces dernières années, une plus grande variété de forme et d'agencement des feux a été obtenue grâce à l'utilisation de diodes électroluminescentes et de guides de lumière. Des feux plus discrets et plus esthétiques ont ainsi été conçus. À présent, l'aspect et l'agencement des feux dans les blocs optiques sont des éléments de différenciation majeurs entre les véhicules automobiles.

La présente invention vise à proposer un dispositif lumineux, de signalisation et/ou d'éclairage, apte à créer une illusion optique connue sous le nom de moiré, lorsque le dispositif lumineux est allumé.

### Objet de l'invention

Pour cela, la présente invention propose un dispositif lumineux pour véhicule automobile comprenant un guide de lumière transparent ou translucide. Le guide de lumière est délimité par une première grande face, parallèle ou sensiblement parallèle à une seconde grande face. Les grandes faces sont reliées par une face d'entrée agencée en vis-à-vis d'une source de lumière, de manière à permettre la propagation d'un faisceau lumineux, émis par la source de lumière, entre les grandes faces du guide de lumière. Le guide de lumière comporte des éléments diffusants, aptes à diffuser le faisceau lumineux émis par la source de lumière éclairant sa face d'entrée.

L'invention est remarquable en ce qu'une lame transparente ou translucide est positionnée en regard de la seconde grande face du guide de lumière, et en ce que la lame comporte des éléments diffusants aptes à diffuser les faisceaux lumineux émis par la source de lumière.

Selon l'invention, les éléments diffusants présents dans le guide de lumière et la lame, forment des motifs identiques ou sensiblement identiques.

Selon l'invention, les éléments diffusants présents dans le guide de lumière et la lame, sont au moins partiellement en regard l'un de l'autre.

Selon l'invention, la plus grande distance entre deux éléments diffusants adjacents est égale ou inférieure à 0,8 mm, de préférence comprise entre 0,18 mm et 0,2 mm.

Selon l'invention, la densité d'éléments diffusants dans le guide de lumière et la lame, varie entre 200 éléments diffusants par cm² et 2 500 éléments diffusants par cm².

Selon une autre variante de réalisation de l'invention, les éléments diffusants forment des motifs en forme de quinconce.

Selon l'invention, les éléments diffusants dans le guide de lumière et la lame, comprennent des cavités débouchant au niveau d'une même face et en ce que chaque cavité délimite une ouverture sur ladite face dont la plus grande dimension est égale ou inférieure à 0,12 mm, et en ce que chaque cavité a une profondeur égale ou inférieure à 0,1 mm. De préférence, les cavités débouchent sur la première grande face du guide de lumière, et les cavités débouchent sur une première grande face de la lame positionnée en regard de la seconde grande face du guide de lumière.

Selon une autre variante de réalisation de l'invention, la plus petite distance entre le guide de lumière et la lame est égale ou supérieure à 6 mm.

Selon une autre variante de réalisation de l'invention, la source de lumière est pilotée par une unité de commande configurée pour contrôler l'intensité du faisceau lumineux émis au cours du temps.

Selon une autre variante de réalisation de l'invention, le dispositif lumineux comprend des moyens de translation et/ou de pivotement de la lame par rapport au guide de lumière.

Selon une autre variante de réalisation de l'invention, la lame forme un angle avec le guide de lumière dont la valeur est comprise entre 0° et 60°, ou entre 0° et 45°, de préférence entre 15° et 25°. Selon un mode de réalisation particulier, les plus grandes faces en vis-à-vis du guide de lumière et de la lame, forment un angle dont la valeur est comprise dans les plages de valeurs mentionnées ci-dessus.

Selon une autre variante de réalisation de l'invention, le guide de lumière et/ou la lame peut être courbe ou partiellement courbe.

L'invention concerne également un dispositif lumineux et/ou d'éclairage pour véhicule automobile comprenant un dispositif lumineux tel que décrit ci-dessus.

L'invention concerne aussi un véhicule automobile comprenant un dispositif lumineux et/ou d'éclairage tel que décrit ci-dessus.

### Description des figures

La description qui va suivre en regard des dessins annexés suivants, donnés à titre d'exemples non limitatifs permettra de mieux comprendre en quoi consiste l'invention et comment elle peut être réalisée :
- la figure 1 représente une vue de profil d'un dispositif lumineux selon l'invention ;
- la figure 2 représente une coupe longitudinale partielle d'un guide de lumière du dispositif lumineux illustré par la figure 1 ;
- la figure 3 représente une vue de face partielle d'un guide de lumière du dispositif lumineux illustré par la figure 2.

### Description détaillée d'un exemple de réalisation

Pour rappel, l'invention propose un dispositif lumineux, de signalisation et/ou d'éclairage, apte à créer une illusion optique connue sous le nom de moiré, lorsque le dispositif lumineux est allumé.

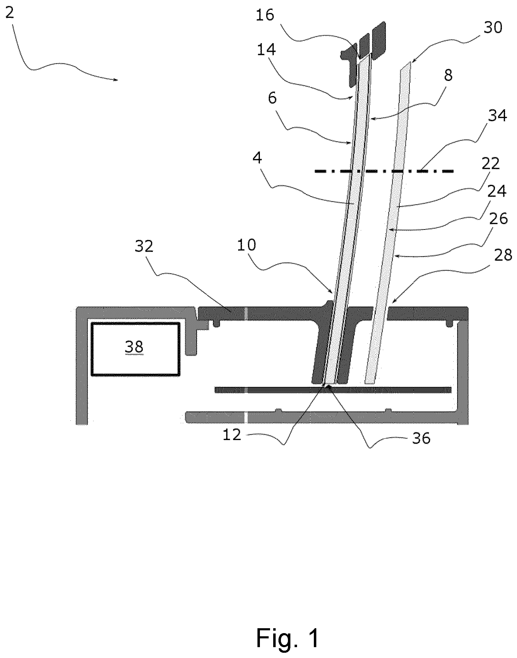

La figure 1 illustre un mode de réalisation non limitatif d'un dispositif lumineux 2 selon l'invention. Selon le présent exemple, le dispositif lumineux comporte un guide lumière 4 légèrement courbé. Le rayon de courbure du guide de lumière est compris entre 40 mm et 1 000 mm. Le guide de lumière est délimité par une première grande face 6 parallèle ou sensiblement parallèle à une seconde grande face 8. La plus petite distance séparant la première grande face 6 de la seconde grande face 8, est comprise entre 1 mm et 8 mm, de préférence entre 2 mm et 5 mm. Le guide de lumière 4 s'étend entre une extrémité proximale 10, délimitée par une face d'entrée 12, et une extrémité distale 14 opposée, délimitée par une face de sortie 16. La plus petite distance séparant la face d'entrée 12 de la face de sortie 16 est comprise entre 10 mm et 550 mm, de préférence entre 30 mm et 200 mm. La face d'entrée 12 est normale ou sensiblement normale aux grandes faces du guide de lumière. La face de sortie 16 est inclinée par rapport aux grandes faces du guide de lumière, de manière à former un biseau au niveau de l'extrémité distale 14. Le guide de lumière 4 est réalisé à partir de polycarbonate ou de polyméthacrylate de méthyle. Le guide de lumière 4 est translucide, de préférence transparent à la lumière du jour.

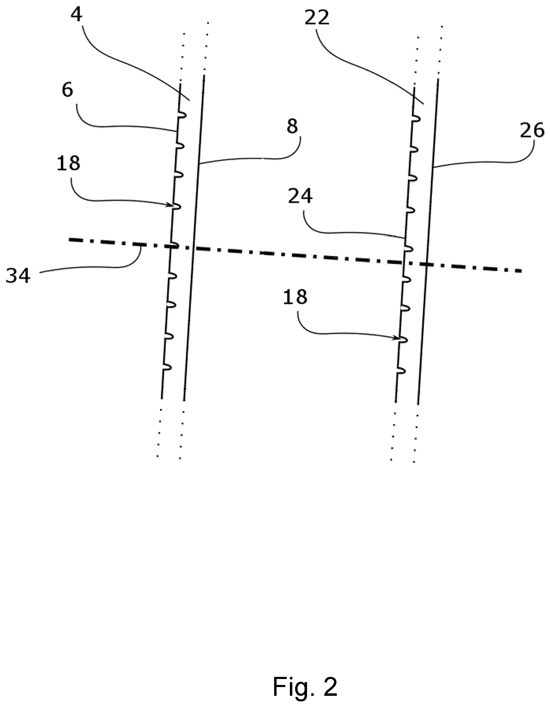

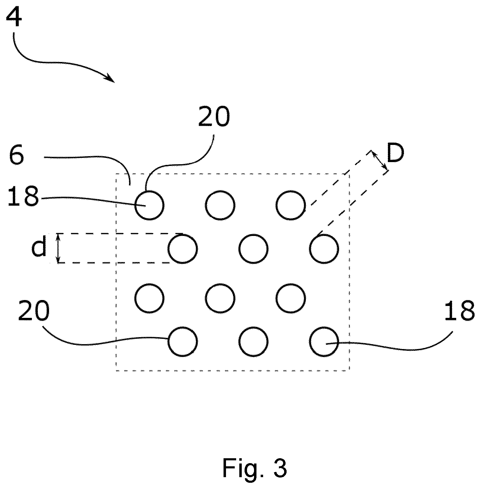

Le guide de lumière 4 comporte des éléments diffusants aptes à diffuser la lumière du jour. Les éléments diffusants sont visibles sur les figures 2 et 3, représentant respectivement une coupe longitudinale et une vue de face de la première grande face 6 du guide de lumière 4. Les éléments diffusants comprennent des cavités 18 réalisées à travers la première grande face 6. La profondeur des cavités 18, définie selon une direction normale à la première grande face 6, est égale ou inférieure à 1,2 mm, de préférence comprise entre 0,05 mm et 0,7 mm. Chaque cavité 18 délimite une ouverture 20 au niveau de la première grande face 6 des guides de lumière. Les ouvertures 20 sont de forme identique. La plus grande dimension d d'une ouverture 20 est égale ou inférieure à 0,7 mm, de préférence comprise entre 0,03 mm et 0,5 mm. La plus petite distance D séparant deux ouvertures adjacentes, est égale ou supérieure à 0,12 mm, de préférence comprise entre 0,2 mm et 0,8 mm. La surface totale délimitée par les ouvertures 20, est égale ou inférieure à 21% de la surface totale de la première grande face 6 du guide de lumière, de préférence comprise entre 3% et 21%. En d'autres termes, la densité des éléments diffusant au niveau d'une première grande face 6 d'un guide de lumière est comprise entre 10 cavités par cm2 et 2 500 cavités par cm2, de préférence entre 50 et 500 cavités par cm2. Les cavités 18 sont agencées de sorte à former des motifs en forme de quinconce. La densité peut évoluer en fonction de la longueur et de l'homogénéité désirée.

Le dispositif lumineux 2 comporte également une lame 22 légèrement courbée. Le rayon de courbure de la lame est compris entre 40 mm et 1 000 mm. De préférence, le rayon de courbure de la lame est identique à celui du guide de lumière. La lame est délimitée par une première grande face 24 parallèle ou sensiblement parallèle à une seconde grande face 26. La plus petite distance séparant la première grande face 24 de la seconde grande face 26 de la lame, est comprise entre 1 mm et 8 mm, de préférence entre 2 mm et 5 mm, de manière à favoriser le passage d'un flux d'air pour limiter un phénomène de condensation entre la lame et le guide de lumière. La lame 22 s'étend entre une extrémité proximale 28 et une extrémité distale 30 opposée. La plus petite distance séparant les extrémités proximale et distale est comprise entre 10 mm et 550 mm, de préférence entre 30 mm et 200 mm. La lame 20 est réalisé à partir de polycarbonate ou de polyméthacrylate de méthyle. La lame 20 est translucide, de préférence transparent à la lumière du jour.

Selon l'invention, la lame 22 comporte également des éléments diffusants aptes à diffuser la lumière du jour. Les éléments diffusants sont visibles sur la figure 2. Les éléments diffusants comprennent des cavités 18 réalisées à travers la première grande face 24 de la lame. La profondeur des cavités 18, définie selon une direction normale à la première grande face 24, est égale ou inférieure à 1,2 mm, de préférence comprise entre 0,05 et 0,7 mm. Chaque cavité 18 délimite une ouverture au niveau de la première grande face 24 de forme identique. La plus grande dimension d'une ouverture est égale ou inférieure à 0,7 mm, de préférence comprise entre 0,03 mm et 0,5 mm. La plus petite distance séparant deux ouvertures adjacentes, est égale ou supérieure à 0,12 mm, de préférence comprise entre 0,2 mm et 0,8 mm. La surface totale délimitée par les ouvertures, est égale ou inférieure à 21% de la surface totale de la première grande face 24 de la lame, de préférence comprise entre 3% et 21%. En d'autres termes, la densité des éléments diffusant au niveau de la première grande face 24 de la lame est comprise entre 10 cavités par cm² et 2 500 cavités par cm², de préférence entre 50 et 500. Les cavités 18 sont agencées de sorte à former des motifs identiques à celui formé par les cavités 18 présentes dans le guide de lumière 4. La densité peut évoluer en fonction de la longueur et de l'homogénéité désirée.

Le guide de lumière 4 et la lame 22 sont maintenus au niveau de leur extrémité proximale par l'intermédiaire d'un châssis 32 visible sur la figure 1. Le châssis maintient le guide de lumière 4 et la lame 22 de sorte à être parallèles ou sensiblement parallèles entre eux ou bien former un angle égal ou inférieur à 60°. Le guide de lumière et la lame sont centrés sur un même axe d'observation 34, perpendiculaire ou sensiblement perpendiculaire aux premières grandes faces. En d'autres termes, la lame 22 est positionnée devant le guide de lumière. La plus petite distance entre la lame et le guide de lumière est égale ou supérieure à 2 mm, de préférence entre 4 mm et 50 mm.

Le dispositif lumineux 2 comporte une source de lumière 36 agencée en vis-à-vis de la face d'entrée 12 du guide de lumière, de sorte à permettre la propagation d'un faisceau lumineux dans le guide de lumière. Lorsque la source de lumière est activée, le guide de lumière s'illumine et diffuse une partie des faisceaux lumineux le long de l'axe d'observation 34. Le guide de lumière forme ainsi un écran lumineux apte à éclairer une scène et/ou être visible par un observateur. La source de lumière 36 se compose d'une ou de plusieurs diodes électroluminescentes positionnées le long de la face d'entrée 12 du guide de lumière 4. La source de lumière 36 est pilotée par une unité de commande 38 de manière à permettre le fonctionnement de la source de lumière de façon alternative. Selon le présent exemple, la source de lumière 36 est apte à émettre un faisceau lumineux dont l'intensité est comprise entre 0,1 Im et 500 lm, de préférence entre 2 lm et 150 lm. Éventuellement, la source de lumière est apte à émettre des faisceaux lumineux de couleurs différentes au cours du temps.

L'invention propose ainsi un dispositif lumineux 2 comprenant un guide de lumière 4 apte à émettre des signaux lumineux en direction d'un observateur. Le guide de lumière est positionné derrière une lame 22. La lame et le guide de lumière comprennent tous deux des éléments diffusants 18 formant des motifs identiques et en vis-à-vis. De façon avantageuse, les éléments diffusants sont formés de manière à ne pas être visibles par un observateur, ayant une acuité visuelle de 10/10, positionné à une distance égale ou supérieure à 50 cm de la seconde grande face 26 de la lame, lorsque la source de lumière 36 est éteinte. En d'autres termes, pour un observateur se trouvant à une distance suffisante du dispositif lumineux 2, les éléments diffusants ne sont pas perceptibles visuellement et de ce fait n'engendrent aucun effet visuel particulier lorsque la source de lumière est éteinte. À l'inverse, lorsque la source de lumière est activée, les éléments diffusants 18 diffusent les faisceaux lumineux émis par la source de lumière, au niveau des premières grandes faces du guide de lumière et de la lame. Le même observateur perçoit alors la présence des éléments diffusants par l'intermédiaire des faisceaux lumineux diffusés par les éléments diffusants. Cela se traduit pour l'observateur par un effet visuel ou illusion optique, connue sous le nom de moiré. En fonction de son angle de vision, l'observateur perçoit alors un motif de forme changeante. De façon avantageuse, cet effet visuel est perceptible par un observateur uniquement lorsque la source de lumière est activée. En d'autres termes, le dispositif lumineux est d'aspect discret lorsque la source de lumière est éteinte.

Selon une variante de réalisation, le dispositif lumineux comprend des moyens de translation et/ou de pivotement de la lame, par rapport au guide de lumière, de manière à amplifier et/ou modifier l'illusion optique lorsque la source de lumière est allumée.

## Revendications

1. Dispositif lumineux (2) pour véhicule automobile apte à créer une illusion d'optique connue sous le nom de moiré lorsque le dispositif est allumé, comprenant un guide de lumière (4) transparent ou translucide, le guide de lumière (4) étant délimité par une première grande face (6) parallèle ou sensiblement parallèle à une seconde grande face (8), les grandes faces étant reliées par une face d'entrée (12) agencée en vis-à-vis d'une source de lumière (36) de manière à permettre la propagation d'un faisceau lumineux émis par la source de lumière (36) entre les grandes faces du guide de lumière, le guide de lumière comportant des éléments diffusants (18) aptes à diffuser le faisceau lumineux émis par la source de lumière (36) éclairant sa face d'entrée (12), **caractérisé en ce qu'**une lame (22) transparente ou translucide est positionnée en regard de la seconde grande face (8) du guide de lumière et **en ce que** la lame (22) comporte des éléments diffusants (18) aptes à diffuser les faisceaux lumineux émis par la source de lumière (36), et **en ce que** les éléments diffusants (18) présents dans le guide de lumière (4) et la lame (22), forment des motifs identiques ou sensiblement identiques, et **en ce que** les éléments diffusants (18) présents dans le guide de lumière (4) et la lame (22), sont au moins partiellement en regard l'un de l'autre, et **en ce que** la plus grande distance (D) entre deux éléments diffusants (18) adjacents est égale ou inférieure à 0,8 mm, et **en ce que** la densité d'éléments diffusants (18) dans le guide de lumière et la lame (22), varie entre 200 éléments diffusants par cm2 et 2 500 éléments diffusants par cm2, et **en ce que** les éléments diffusants dans le guide de lumière (4) et la lame (22), comprennent des cavités (18) débouchant au niveau d'une même face et **en ce que** chaque cavité (18) délimite une ouverture (20) sur ladite face dont la plus grande dimension (d) est égale ou inférieure à 0,12 mm, et **en ce que** chaque cavité (18) a une profondeur égale ou inférieure à 0,1 mm.

2. Dispositif lumineux (2) selon la revendication 1, **caractérisé en ce que** les éléments diffusants (18) forment des motifs en forme de quinconce.

3. Dispositif lumineux (2) selon la revendication 1 ou 2, **caractérisé en ce que** les cavités (18) débouchent sur la première grande face (6) du guide de lumière (4), et **en ce que** les cavités (18) débouchent sur une première grande face (24) de la lame (22), positionnée en regard de la seconde grande face (8) du guide de lumière (4).

4. Dispositif lumineux (2) selon l'une des revendications 1 à 3, **caractérisé en ce que** la plus petite distance entre le guide de lumière (4) et la lame (22) est égale ou supérieure à 6 mm.

5. Dispositif lumineux (2) selon l'une des revendications 1 à 4, **caractérisé en ce que** la source de lumière (36) est pilotée par une unité de commande (38) configurée pour contrôler l'intensité du faisceau lumineux émis au cours du temps.

6. Dispositif lumineux (2) selon l'une des revendications 1 à 5, **caractérisé en ce qu'**il comprend des moyens de translation et/ou de pivotement de la lame (22) par rapport au guide de lumière.

7. Dispositif lumineux (2) selon l'une des revendications 1 à 6, **caractérisé en ce que** la lame (22) forme un angle avec le guide de lumière (36) dont la valeur est comprise entre 0° et 45°.

8. Dispositif de signalisation et/ou d'éclairage pour véhicule automobile comprenant un dispositif lumineux (2) selon l'une des revendications 1 à 7.

9. Véhicule automobile comprenant un dispositif de signalisation et/ou d'éclairage selon la revendication 8

## Patentansprüche

1. Leuchtvorrichtung (2) für ein Kraftfahrzeug, die zur Erzeugung eines als Moiré bekannten optischen Effekts fähig ist, wenn die Vorrichtung eingeschaltet ist,
mit einem durchsichtigen oder durchscheinenden Lichtleiter (4), wobei der Lichtleiter (4) durch eine zu einer zweiten großen Seite (8) parallele oder im Wesentlichen parallele erste große Seite (6) begrenzt ist, wobei die großen Seiten durch eine gegenüber einer Lichtquelle (36) angeordnete Eingangsseite (12) miteinander verbunden sind, um die Ausbreitung eines von der Lichtquelle (36) ausgesandten Lichtstrahls zwischen den großen Seiten des Lichtleiters zu ermöglichen, wobei der Lichtleiter Streuelemente (18) aufweist, die geeignet sind, den von der Lichtquelle (36) ausgesandten, dessen Eingangsseite (12) beleuchtenden Lichtstrahl zu streuen, **dadurch gekennzeichnet, daß** eine durchsichtige oder durchscheinende Lamelle (22) gegenüber der zweiten großen Seite (8) des Lichtleiters angeordnet ist und daß die Lamelle (22) Streuelemente (18) aufweist, die geeignet sind, von der Lichtquelle (36) ausgesandte Lichtstrahlen zu streuen, und daß die im Lichtleiter (4) und der Lamelle (22) vorhandenen Streuelemente (18) identische oder im Wesentlichen identische Motive bilden und daß die im Lichtleiter (4) und der Lamelle (22) vorhandenen Streuelemente (18) mindestens teilweise einander gegenüberliegen und daß der größte Abstand (D) zwischen zwei benachbarten Streuelementen (18) gleich oder kleiner als 0,8 mm ist und daß die Dichte der Streuelemente (18) im Lichtleiter und in der Lamelle (22) zwischen 200 Streuelementen pro cm² und 2500 Streuelementen pro cm² variiert und daß die Streuelemente im Lichtleiter (4) und in der Lamelle (22) Hohlräume (18) aufweisen, die in Höhe einer selben Seite offen sind und daß jeder Hohlraum auf der besagten Seite eine Öffnung (20) begrenzt, deren größte Abmessung (d) gleich oder kleiner als 0,12 mm ist und daß jeder Hohlraum (18) eine Tiefe von kleiner als oder gleich 0,1 mm hat.

2. Leuchtvorrichtung (2) gemäß Anspruch 1, **dadurch gekennzeichnet, daß** die Streuelemente (18) Motive in versetzter Form bilden.

3. Leuchtvorrichtung (2) gemäß Anspruch 1 oder 2, **dadurch gekennzeichnet, daß** die Hohlräume (18) zur ersten großen Seite (6) des Lichtleiters (4) offen sind und daß die Hohlräume (18) auf einer ersten großen, gegenüber der ersten großen Seite (8) des Lichtleiters (4) angeordneten Seite (24) der Lamelle (22) offen sind.

4. Leuchtvorrichtung (2) gemäß einem der Ansprüche 1 bis 3, **dadurch gekennzeichnet, daß** der kleinste Abstand zwischen dem Lichtleiter (4) und der Lamelle (22) gleich oder größer als 6 mm ist.

5. Leuchtvorrichtung (2) gemäß einem der Ansprüche 1 bis 4, **dadurch gekennzeichnet, daß** die Lichtquelle (36) durch eine Steuereinheit (38) gesteuert wird, die dazu ausgelegt ist, die Stärke des im Laufe der Zeit ausgesandten Lichtstrahls zu steuern.

6. Leuchtvorrichtung (2) gemäß einem der Ansprüche 1 bis 5, **dadurch gekennzeichnet, daß** sie Mittel zum Versetzen und/oder Schwenken der Lamelle (22) gegenüber dem Lichtleiter aufweist.

7. Leuchtvorrichtung (2) gemäß einem der Ansprüche 1 bis 6, **dadurch gekennzeichnet, daß** die Lamelle (22) mit dem Lichtleiter (36) einen Winkel bildet, dessen Wert zwischen 0° und 45° liegt.

8. Anzeige- und/oder Beleuchtungsvorrichtung für ein Kraftfahrzeug mit einer Leuchtvorrichtung (2) gemäß einem der Ansprüche 1 bis 7.

9. Kraftfahrzeug mit einer Anzeige- und/oder Beleuchtungsvorrichtung gemäß Anspruch 8.

## Claims

1. Light device (2) for a motor vehicle capable of creating an optical effect known as Moiré when the device is lighted,
comprising a transparent or translucent light guide (4), the light guide (4) being delimited by a first major face (6) parallel or essentially parallel to a second major face (8), the major faces being connected by an inlet face (12) situated in front of a light source (36) so as to allow the propagation of a light beam emitted by the light source (36) between the major faces of the light guide, the light guide comprising diffusing elements (18) lighting its inlet face (12), **characterized in that** a transparent or translucent blade (22) is positioned opposite the second major face (8) of the light guide and **in that** the blade (22) comprises diffusing elements (18) able to diffuse the light beams emitted by the light source (36), and **in that** the diffusing elements (18) present in the light guide (4) and in the blade (22) are at least partially opposite one another, and **in that** the greatest distance (D) between two adjacent diffusing elements (18) is equal to or less than 0.8 mm, and **in that** the density of diffusing elements (18) in the light guide and in the blade (22) varies between 200 diffusing elements per cm² and 2500 diffusing elements per cm², and **in that** the diffusing elements in the light guide and in the blade (22) comprise cavities (18) open at the level of a same face, and **in that** each cavity (18) delimits an opening (20) on said face the greatest dimension (d) of which is equal to or less than 0.12 mm, and **in that** each cavity (18) has a depth equal to or less than 0.1 mm.

2. Light device (2) according to claim 1, **characterized in that** the diffusing elements (18) form patterns in quincunx.

3. Light device (2) according to claim 1 or 2, **characterized in that** the cavities (18) are open on the first major face (6) of the light guide (4), and **in that** the cavities are open on a first major face (24) of the blade (22) positioned opposite the second major face (8) of the light guide (4).

4. Light device (2) according to anyone of claims 1 to 3, **characterized in that** the shortest distance between the light guide (4) and the blade (22) is equal to or more than 6 mm.

5. Light device (2) according to anyone of claims 1 to 4, **characterized in that** the light source (36) is controlled by a control unit (38) configured for controlling the intensity of the light beam emitted over time.

6. Light device (2) according to anyone of claims 1 to 5, **characterized in that** it comprises means for traveling and/or pivoting the blade (22) in relation to the light guide.

7. Light device (2) according to anyone of claims 1 to 6, **characterized in that** the blade (22) forms an angle with the light guide (36) the amount of which is between 0° and 45°.

8. Signaling and/or lighting device or a motor vehicle comprising a light device (2) according to anyone of claims 1 to 7.

9. Motor vehicle comprising a signaling and/or lighting device according to claim 8.
